# EUROPÄISCHE PATENTSCHRIFT

(11) **EP 3 821 690 B1**
(45) Veröffentlichungstag und Bekanntmachung des Hinweises auf die Patenterteilung: **27.05.2026**
(21) Anmeldenummer: 20207601.4
(22) Anmeldetag: 13.11.2020
(51) Int. Cl.: A01D 25/00

(54) **ERNTEVORRICHTUNG ZUM ERNTEN VON WURZELFRÜCHTEN UND ENTSPRECHENDES VERFAHREN**
HARVESTING DEVICE FOR HARVESTING ROOT CROPS AND CORRESPONDING METHOD
DISPOSITIF DE RÉCOLTE DESTINÉ À LA RÉCOLTE DE PLANTES SARCLÉES ET PROCÉDÉ CORRESPONDANT

(30) Priorität: 15.11.2019 DE 102019130953
(43) Veröffentlichungstag der Anmeldung: 19.05.2021
(73) Patentinhaber: Exel Industries, 51200 Epernay (FR)
(72) Erfinder: RICHER, Eduard, 93095 Hagelstadt/Gailsbach (DE)
(74) Vertreter: Lavoix

(56) Entgegenhaltungen:
- DE-A1- 19 949 644
- DE-A1- 2 802 695
- DE-A1- 2 834 462
- DE-A1- 3 105 701
- DE-B- 1 161 722

## Beschreibung

Die vorliegende Erfindung betrifft eine Erntevorrichtung gemäß dem Oberbegriff des Anspruchs 1.

Es sind Rodevorrichtungen bekannt, die dazu dienen, im Boden befindliche Wurzelfrüchte, z.B. Zuckerrüben zu roden.

Die bekannten Rodevorrichtungen weisen ein Paar Rodeschare auf, die die zu rodenden Wurzelfrüchte zwischen sich aufnehmen und durch die Relativbewegung der Erntevorrichtung und dem Boden aus dem Boden befördern.

Die Rodeschare sind zum Beispiel als Radschare ausgebildet.

Eine solche Rodevorrichtung ist z.B. aus der DE1161722 bekannt.

Die Wurzelfrüchte sind im Allgemeinen in Reihen gesät, wachsen jedoch zum Teil in Querrichtung versetzt zueinander, in unterschiedlichen Größen und unterschiedlichen Tiefen.

Diese inhomogene Struktur der zu erntenden Wurzelfrüchte führt zu einer geringen Ausbeute bei der Ernte, z.B. durch Wurzelbruch beim Herausziehen, durch Wurzelschnitt durch die Rodeschare und durch Verschleiß der Rodeschare.

Die vorliegende Erfindung hat zum Ziel den Erntevorgang der Wurzelfrüchte effizienter zu gestalten.

Die vorliegende Erfindung hat insbesondere die Aufgabe, den Nachteilen des Standes der Technik abzuhelfen und Wurzelbruch, -schnitt und/oder Rodescharverschleiß gering zu halten. Eine weitere Aufgabe ist eine einfache Konstruktionsweise der Vorrichtung.

Zu diesem Zweck schlägt die Erfindung eine Erntevorrichtung vor, die die Merkmale des Anspruches 1 aufweist.

Vorteilhafte Ausgestaltungen sind in den Unteransprüchen sowie in der Beschreibung angegeben.

Die Erfindung hat ebenfalls ein Verfahren gemäß Anspruch 8 zum Gegenstand.

Die Erfindung wird anhand der folgenden Beschreibung eines Ausführungsbeispiels erläutert, das Bezug auf die anliegenden Zeichnungen nimmt.

Die einzelnen Merkmale der Ansprüche und der Beschreibung sind in jeder beliebigen Kombination oder Unterkombination als offenbart zu sehen, soweit sie technisch nicht inkompatibel sind.
Figur 1 zeigt eine erfindungsgemäße Erntevorrichtung in einer schematischen Seitenansicht als Teil einer erfindungsgemäßen Erntemaschine;
Figur 2 zeigt die erfindungsgemäße Erntevorrichtung von Figur 1 in einer Vorderansicht; und

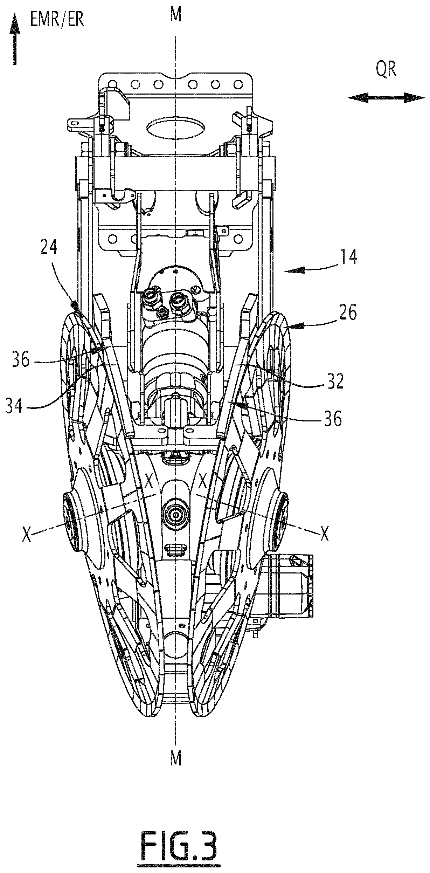

Figur 3 zeigt die erfindungsgemäße Erntevorrichtung in einer Ansicht von unten.

In der vorliegenden Beschreibung der Erfindung werden Eignungsangaben, wie "dazu ausgebildet" oder "dazu geeignet", dahingehend verwendet, dass die zugehörige Aktion mitoffenbart ist. Zum Beispiel umfasst der Ausdruck "dazu ausgebildet zu roden" auch die Offenbarung "roden".

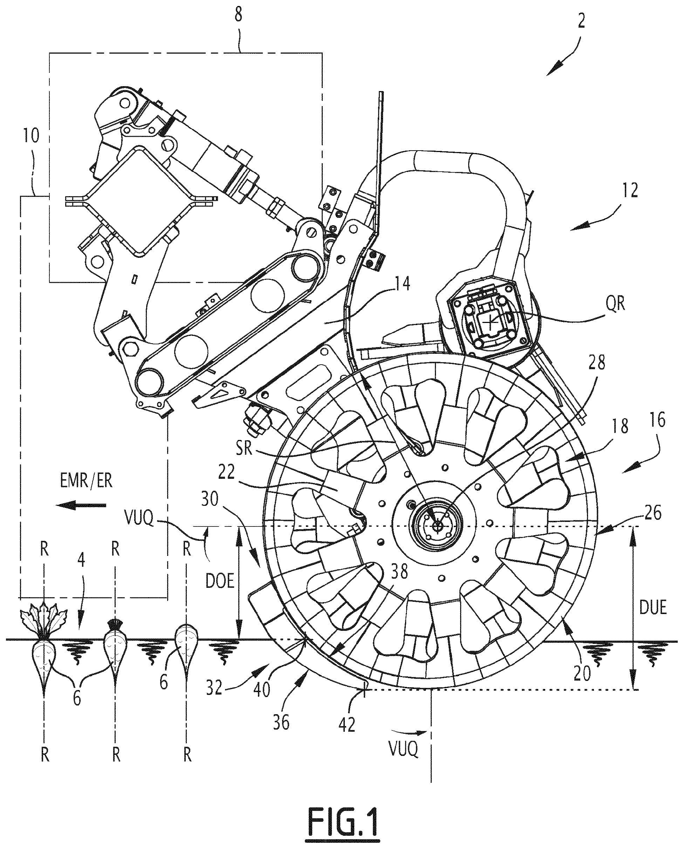

Die Figur 1 zeigt schematisch eine erfindungsgemäße Erntemaschine 2.

Die Erntemaschine 2 dient zum Ernten bzw. Roden von im Boden 4 befindlichen Wurzelfrüchten, insbesondere Rüben 6 und im vorliegenden Fall von Zuckerrüben. Im nachfolgenden werden die Wurzelfrüchte bzw. Zuckerrüben allgemein als Rüben 6 bezeichnet. Jede zu erntende Rübe 6 weist eine Mittelachse R-R auf, die im Allgemeinen vertikal ausgerichtet ist.

Die Erntemaschine 2 definiert eine Erntefahrtrichtung EFR, die in Figur 1 von rechts nach links verläuft und die im Allgemeinen entlang einer Reihe von Rüben 6 verläuft.

Die Erntemaschine 2 weist einen Maschinenrahmen 8 auf, an dem eine oder mehrere, nur schematisch angedeutete Rübenvorbehandlungsvorrichtungen 10 angebracht sind. Diese Rübenvorbehandlungsvorrichtungen 10 sind z.B. ein Schlegler, der die Blätter der Rüben 6 abschlegelt und/oder ein Nachköpfer, der die Blattansätze der Rüben 6 abschneidet.

Die Erntemaschine 2 weist weiterhin eine Erntevorrichtung 12 zum Ernten bzw. zum Roden von im Boden 4 befindlichen Rüben 6 auf.

Die Erntevorrichtung 12 weist einen Tragrahmen 14 auf, mit der die Erntevorrichtung am Maschinenrahmen 8 befestigt ist. Der Tragrahmen 14 kann bezüglich des Maschinenrahmens 8 positionsverstellbar sein, z.B. über Hydraulikzylinder und Gelenke.

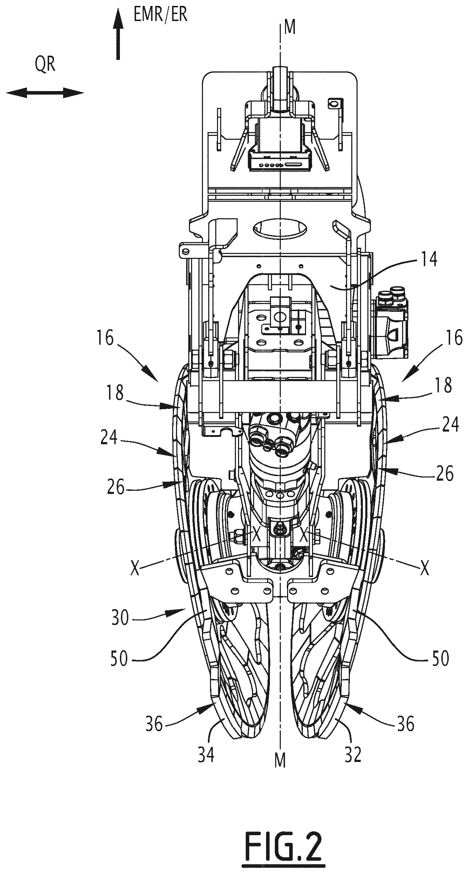

Die Erntevorrichtung 12 weist weiterhin ein Paar bzw. zwei am Tragrahmen 14 angebrachte Rodeschare 16 auf. Die Rodeschare 16, bzw. das Paar Rodeschare 16 sind dazu ausgebildet im Boden befindliche Rüben 6 aus dem Boden zu befördern. Hierzu sind die beiden Rodeschare 16 in Erntefahrtrichtung EFR im wesentlichen V-förmig bzw. divergierend angeordnet. Die Rodeschare 16 definieren zwischen sich eine Mittelebene M-M (siehe Figur 2), wobei die Mittelebene im Allgemeinen mittig zwischen den Rodescharen 16 verläuft. Wenn die Erntemaschine auf einer horizontalen Ebene steht, ist die Mittelebene M-M vertikal und parallel zu einer Längsebene der Erntemaschine 12. Die Mittelebene M-M erstreckt sich parallel zur Zeichenebene der Figur 1.

Das Paar Rodeschare 16 ist vorliegend ein Paar Radschare 18. Jede Radschar 18 ist drehbar um eine Radscharachse X-X am Tragrahmen 14 angebracht. Die oder jede Radschar 18 des Paares erstreckt sich in Ernterichtung ER bzw. in Erntefahrtrichtung EFR von der Mittelebene M-M weg.

Die Erntevorrichtung 12 definiert eine Ernterichtung ER, die der Erntefahrtrichtung EFR entspricht. Die Erntevorrichtung definiert eine Querrichtung QR, die in einer Ebene senkrecht zur Ernterichtung ER verläuft und im Gebrauch der Erntevorrichtung im Wesentlichen horizontal verläuft und senkrecht zur Mittelebene M-M verläuft.

Die Rodeschare 16 sind am Tragrahmen 14 beweglich, bzw. verschiebbar in der Querrichtung QR zur Ernterichtung ER angebracht.

Jede Radschar 18 weist eine konische Form auf, die vorzugsweise einen Öffnungswinkel von mindestens 150° aufweist. Alternativ weist jede Radschar 18 eine scheibenförmige Form auf. Jede Radschar 18 besitzt, bezüglich ihrer Radscharachse X-X, eine im Wesentlichen kreisförmige oder Kreissegmente umfassende Rodekante 20. Die Rodekante 20 kann auch im Wesentlichen aus Kreissegmenten bestehen. Jede Radschar 18 umfasst zwei sich gegenüberliegende Seitenflächen 22.

Die Rodekante 20 ist durch eine Kantenstirnfläche 24 und zwei daran anschließende Kantenseitenflächen 26 gebildet. Die Kantenseitenflächen 26 sind im vorliegenden Beispiel gegenüber den Seitenflächen 22 abgewinkelt und Kreisringsegmentförmig.

Jede Radschar 18 ist über eine Nabe 28 drehbar am Tragrahmen 14 befestigt. Die Erntevorrichtung 12 definiert einen Scharradius SR der der Abstand zwischen der Radscharachse X-X und der Rodekante 20 ist.

Die Erntevorrichtung 12 weist eine Führungsvorrichtung 30 auf, die dazu ausgebildet ist die Position einer im Boden befindlichen und zu erntenden Rübe 6 zu erfassen und das Paar Rodeschare 16 in Querrichtung QR mit Bezug auf die zu erntende Rübe 6 in Richtung einer zentrierten Position zu führen. Die zentrierte Position ist die Position, in der die Rübe 6 sich in Erntefahrtrichtung EFR bzw. in Ernterichtung ER mittig zwischen den Rodescharen 16 des Paares Rodeschare befindet, um aus dem Boden 4 befördert zu werden. Mit anderen Worten ist die zentrierte Position die Position der Rodeschare 16 in der eine Mittelachse R-R der zu erntenden Rübe 6 in der Mittelebene M-M liegt.

Die Führungsvorrichtung 30 weist eine erste Führungsschar 32 auf, die in Ernterichtung ER dem Paar Rodeschare 16 vorangestellt ist. Genauer ist die erste Führungsschar 32 einer ersten Rodeschar des Paares Rodeschare 16 vorangestellt und dieser zugeordnet. Die erste Führungschar 32 ist dazu ausgebildet die im Boden befindliche, zu erntende Rübe 6 zu kontaktieren und, in Abhängigkeit der relativen Position der Rübe 6 und der ersten Führungsschar, das Paar Rodeschare bezüglich des Tragrahmens 14 in Querrichtung QR zu bewegen. Diese Bewegung ist dabei so gerichtet, dass sie zur zentrierten Position gerichtet ist.

Die Führungsvorrichtung 30 weist eine zweite Führungsschar 34 auf, die in Ernterichtung ER dem Paar Rodeschare 16 vorangestellt ist. Genauer ist die zweite Führungsschar 34 einer zweiten Rodeschar des Paares Rodeschare 16 vorangestellt und dieser zugeordnet. Die zweite Führungschar 34 ist dazu ausgebildet die im Boden befindliche, zu erntende Rübe 6 zu kontaktieren und, in Abhängigkeit der relativen Position der Rübe 6 und der zweiten Führungsschar 34, das Paar Rodeschare 16 bezüglich des Tragrahmens in Querrichtung QR zu bewegen. Diese Bewegung ist dabei so gerichtet, dass sie zur zentrierten Position gerichtet ist. Die durch die erste Führungsschar 32 erzeugte Bewegung des Paares Rodeschare 16 ist der durch die zweite Führungsschar 34 erzeugte Bewegung des Paares Rodeschare 16 entgegengerichtet.

Jede der ersten 32 und zweiten 34 Führungsschar weist eine Scharvorderkante 36 und eine Scharhinterkante 38 auf, wobei die Scharvorderkante in Ernterichtung ER im Wesentlichen nach vorne gerichtet ist und die Scharhinterkante im Wesentlichen zur Rodekante 20 der zugehörigen bzw. zugeordneten Radschar gerichtet ist und mit dieser Rodekante 20 fluchtet.

Die Scharvorderkante 36 ist bevorzugterweise bogenförmig. Alternativ kann die Scharvorderkante 36 auch gerade sein oder eine andere Form aufweisen Die Scharhinterkante 38 ist bogenförmig und ihr Radius entspricht im Wesentlichen dem Radius SR der zugeordneten Rodekante 20 bzw. ist etwas grösser als dieser.

Die Scharvorderkante 36 jeder Führungsschar 32 bzw. 34 ist weiter von der Mittelebene M-M entfernt als der Teil der Rodekante 20 der zugeordneten Radschar 18, der an die Scharhinterkante 38 angrenzt.

Der Abstand in Querrichtung QR der beiden Scharvorderkanten 36 der Führungsschare 32, 34 eines Paares Radschare 18 ist grösser als der Abstand in Querrichtung QR der Rodekanten 20 dieses Paares Radschare 18, gemessen auf gleicher Höhe wie der Abstand der Scharvorderkanten.

Jede Führungsschar 32, 34 ist im Wesentlichen fluchtend mit den Seitenflächen 22 oder Kantenseitenflächen 26 des zugeordneten Radschars angeordnet. Jede Führungsschar 32, 34 weist Seitenflächen auf, die sich im Wesentlichen parallel bzw. koplanar mit den Seitenflächen 22 oder Kantenseitenflächen 26 erstrecken.

Jede Führungsschar 32, 34 weist ein oberes Ende 40 und ein unteres Ende 42 auf.

Das obere Ende 40 jeder Führungsschar 32, 34 hat, in Querrichtung QR gesehen (also senkrecht zur Ebene der Figur 1), einen vertikalen Abstand DOE von der Rodescharachse X-X, der zwischen 20% und 60%, und bevorzugterweise zwischen 40% und 60%, des Scharradius SR beträgt.

Das untere Ende 42 jeder Führungsschar 32, 34 hat, in Querrichtung QR gesehen, einen vertikalen Abstand DUE von der Rodescharachse X-X, der zwischen 80% und 100% und bevorzugterweise zwischen 90% und 100% des Scharradius SR beträgt.

Die Position der Rodescharachse X-X für die Bestimmung der obigen Abstände wird in der Radscharnabe festgelegt.

Jede Radschar 20 definiert einen vorderen, unteren Quadranten VUQ. Dieser vordere untere Quadrant VUQ wird im Wesentlichen einerseits durch eine horizontale Halbebene vom Radscharmittelpunkt in Richtung Ernterichtung und eine vertikale Halbebene, die vom Radscharmittelpunkt nach unten ausgeht, begrenzt.

Jede der ersten und zweiten Führungsschar 32, 34 erstreckt sich ausschließlich im vorderen unteren Quadranten VUQ der zugeordneten Radschar 18.

Die Führungsvorrichtung 30 weist je Führungsschar 32, 34 einen Führungsscharträger 50 (Figur 2) auf, der jede der ersten 32 bzw. zweiten 34 Führungsschar mit dem Tragrahmen oder mit der zugeordneten Rodeschar 16 verbindet.

Der Führungsscharträger 50 ist in Querrichtung starr mit der Rodeschar 16 verbunden und z.B. am Getriebegehäuse der Rodeschare 16 befestigt. Die Rodeschar 16 ist jedoch bezüglich der Führungsscharträger 50, bzw der Führungsschare drehbar.

Jeder Führungsscharträger 50 befindet sich auf der Innenseite zwischen den Rodescharen 16 des zugeordneten Paares Rodeschare 16. Jeder Führungsscharträger 50 ist dazu ausgebildet Verunreinigungen, die sich zwischen diesem Paar Rodeschare befinden von diesen Rodescharen abzustreifen.

Die vorliegende Erntevorrichtung ermöglicht eine effiziente Ausrichtung der Rodeschare, insbesondere der Radschare 18, an den zu erntenden Rüben 6. Mit den Führungsscharen 32, 34 wird die nutzbare Öffnung der Erntevorrichtung nach vorne vergrößert, so dass große Rüben wenig tief gerodet werden können und sich somit die Schare an der Rübe zentrieren können.

Die Benutzung der Erntevorrichtung beinhaltet einen oder mehrere der folgenden aufeinanderfolgenden Schritte:
Die Erntevorrichtung wird in Ernterichtung auf einem Boden mit einer Reihe von zu erntenden Rüben bewegt.

Mindestens eine erste oder eine zweite Führungsschar kontaktiert eine zu erntende Rübe, während die Mittelachse dieser Rübe außerhalb der Mittelebene M-M liegt.

Durch das Kontaktieren der ersten oder zweiten Führungsschar 32, 34 der zu erntenden Rübe 6 wird das Paar Rodeschare 16 auf dem Querträger 14 so bewegt, dass die Mittelebene der Mittelachse der Rübe angenähert wird oder mit dieser zusammenfällt.

Die zu erntende Rübe 6 wird mit durch die Rodeschare 16 aus dem Boden befördert.

Alternativ kann die Erntevorrichtung nur eine Führungsschar 32 aufweisen und keine zweite Führungsschar 34.

Die obige Beschreibung beschränkt sich auf ein Paar Rodeschare/Führungsschare. Die Erntemaschine weist im Allgemeinen je zu erntender Reihe Wurzelfrüchte ein Paar dieser Schar auf, z.B. sechs Paare.

## Patentansprüche

1. Erntevorrichtung zum Ernten von im Boden befindlichen Wurzelfrüchten, aufweisend:
- einen Tragrahmen (14),
- mindestens ein Paar am Tragrahmen angebrachte Rodeschare (16), die dazu ausgebildet sind im Boden befindliche Wurzelfrüchte (6) aus dem Boden zu befördern,
- wobei das Paar Rodeschare (16) zwischen sich eine Mittelebene (M-M) definiert,
- wobei die Rodeschare (16) am Tragrahmen beweglich in einer Querrichtung (QR) zu einer Ernterichtung (ER) der Erntevorrichtung angebracht sind,
wobei die Erntevorrichtung eine Führungsvorrichtung (30) aufweist, die dazu ausgebildet ist
die Position einer im Boden befindlichen und zu erntenden Wurzelfrucht (6) zu erfassen und
das Paar Rodeschare (16) in Querrichtung (QR) mit Bezug auf die zu erntende Wurzelfrucht in Richtung einer zentrierten Position zu führen,
wobei die Führungsvorrichtung (30) mindestens eine erste Führungsschar (32) aufweist,
- die in Ernterichtung dem Paar Rodeschare (16) vorangestellt ist, und
- die dazu ausgebildet ist die zu erntende Wurzelfrucht (6) zu kontaktieren und, in Abhängigkeit der relativen Position der Wurzelfrucht und der ersten Führungsschar, das Paar Rodeschare (16) bezüglich des Tragrahmens zu bewegen,
**dadurch gekennzeichnet**
**dass** die Führungsvorrichtung einen Führungsscharträger (50) aufweist, der die erste Führungsschar (32) mit dem Tragrahmen oder mit der zugeordneten Rodeschar verbindet, und dadurch
**dass** der Führungsscharträger (50) sich auf der Innenseite zwischen den Rodescharen (16) eines Paares befindet und dazu ausgebildet ist Verunreinigungen, die sich zwischen dem Paar Rodeschare befindet von diesen Rodescharen abzustreifen.

2. Erntevorrichtung nach Anspruch 1, wobei
das oder jedes Paar Rodeschare (16) ein Paar Radschare (18) ist,
die Radschare drehbar am Tragrahmen angebracht sind, und
jede Radschar (18) eine Rodekante (20) aufweist.

3. Erntevorrichtung nach Anspruch 2, wobei jede Radschar (18)
- eine scheibenförmige Form oder eine konische Form aufweist oder/und
- die oder jede Rodekante (20) im Wesentlichen kreisförmig ist oder Kreissegmente umfasst.

4. Erntevorrichtung nach einem der Ansprüche 1 bis 3, wobei die Führungsvorrichtung (30) mindestens eine zweite Führungsschar (34) aufweist,
- die in Ernterichtung (ER) dem Paar Rodeschare (16) vorangestellt ist und
- die dazu ausgebildet ist die zu erntende Wurzelfrucht (6) zu kontaktieren und, in Abhängigkeit der relativen Position der Wurzelfrucht und der zweiten Führungsschar, das Paar Rodeschare bezüglich des Tragrahmens zu bewegen.

5. Erntevorrichtung nach Anspruch 2 oder 3 oder nach Anspruch 4 in seiner Abhängigkeit von Anspruch 2 oder 3, wobei die oder jede Führungsschar (32, 34) eine Scharvorderkante (36) und eine Scharhinterkante (38) aufweist, wobei die Scharvorderkante in Ernterichtung (ER) gerichtet ist und die Scharhinterkante im Wesentlichen zur Rodekante (20) der zugehörigen Radschar (18) gerichtet ist und mit dieser Rodekante fluchtet.

6. Erntevorrichtung nach Anspruch 5, wobei die oder jede Radschar (18) eines Paares Rodeschare (16) sich in Ernterichtung von der Mittelebene (M-M) weg erstreckt und die Scharvorderkante (36) weiter von der Mittelebene entfernt ist als der Teil der Rodekante (20), der an die Scharhinterkante (38) angrenzt.

7. Erntevorrichtung nach einem der Ansprüche 1 bis 6, wobei
- die oder jede Führungsschar (32, 34) ein oberes Ende (40) und ein unteres Ende (42) aufweist,
- die Erntevorrichtung einen Scharradius SR aufweist der der Abstand zwischen einer Rodescharachse und der Rodekante ist und
- wobei das obere Ende in Querrichtung gesehen einen vertikalen Abstand DOE von der Rodescharachse aufweist, der zwischen 20% und 60% oder zwischen 40% und 60% des Scharradius SR beträgt und/oder
- wobei das untere Ende in Querrichtung gesehen einen vertikalen Abstand DUE von der Rodescharachse aufweist, der zwischen 80% und 100% oder zwischen 90% und 100% des Scharradius SR beträgt.

8. Verfahren zum Roden von Wurzelfrüchten, insbesondere Zuckerrüben, **dadurch gekennzeichnet, dass** mit einer Erntevorrichtung gemäß einem der Ansprüche 1 bis 7, Wurzelfrüchte einer Reihe von Wurzelfrüchten aus dem Boden befördert werden.

## Claims

1. Harvesting device for harvesting root crops in the ground, having:
- a support frame (14),
- at least one pair of lifting shares (16) attached to the support frame, which are designed to lift root crops (6) in the ground out of the ground,
- wherein the pair of lifting shares (16) define a centre plane (M-M) between them,
- wherein the lifting shares (16) are mounted on the support frame movably in a transverse direction (QR) to a harvesting direction (ER) of the harvesting device,
wherein the harvesting device has a guide device (30) which is designed
to detect the position of a root crop (6) in the ground to be harvested, and
to guide the pair of lifting shares (16) in the transverse direction (QR) towards a centred position in relation to the root crop to be harvested,
wherein the guide device (30) has at least one first guide share (32),
- which is placed in front of the pair of lifting shares (16) in the harvesting direction, and
- which is designed to make contact with the root crop (6) to be harvested and, depending on the relative position of the root crop and the first guide share, to move the pair of lifting shares (16) relative to the support frame,
**characterised in that**
the guide device has a guide share carrier (50) which connects the first guide share (32)
with the support frame or with the associated lifting share, and thereby
**in that** the
guide share carrier (50) is located on the inside between the lifting shares (16) of a pair and is designed to remove impurities located between the pair of lifting shares from these lifting shares.

2. Harvesting device according to claim 1, wherein
the or each pair of lifting shares (16) is a pair of wheel shares (18),
the wheel shares are rotatably mounted on the support frame, and
each wheel share (18) has a harvesting edge (20).

3. Harvesting device according to claim 2, wherein each wheel share (18)
- has a disc-shaped form or a conical form or/and
- the or each harvesting edge (20) is essentially circular
or
comprises circular segments.

4. Harvesting device according to any one of claims 1 to 3, wherein the guide device (30) has at least a second guide share (34),
- which is placed in front of the pair of lifting shares (16) in the harvesting direction (ER) and
- which is designed to make contact with the root crop (6) to be harvested and, depending on the relative position of the root crop and the second guide share, to move the pair of lifting shares relative to the support frame.

5. Harvesting device according to claim 2 or 3 or according to claim 4 in its dependence on claim 2 or 3, wherein the or each guide share (32, 34) has a share leading edge (36) and a share trailing edge (38), wherein the share leading edge is directed in the harvesting direction (ER) and the share trailing edge is essentially directed towards the harvesting edge (20) of the associated wheel share (18) and is aligned with this harvesting edge.

6. Harvesting device according to claim 5, wherein the or each wheel share (18) of a pair of lifting shares (16) extends away from the centre plane (M-M) in the harvesting direction and the share leading edge (36) is further away from the centre plane than the part of the harvesting edge (20) adjacent to the share trailing edge (38).

7. Harvesting device according to any one of claims 1 to 6, wherein
- the or
each guide share (32, 34) has an upper end (40) and a lower end (42),
- the harvesting device has a share radius SR which is the distance between a lifting share axis and the harvesting edge, and
- wherein the upper end, viewed in the transverse direction, has a vertical distance DOE from the lifting share axis, which is between 20% and 60% or between 40% and 60% of the share radius SR and/or
- wherein the lower end, viewed in the transverse direction, has a vertical distance DUE from the lifting share axis, which is between 80% and 100% or between 90% and 100% of the share radius SR.

8. Method for harvesting root crops, in particular sugar beet, **characterised in that** root crops from a range of root crops are lifted out of the ground
using a harvesting device according to any one of claims 1 to 7.

## Revendications

1. Dispositif de récolte pour récolter des plantes racines se trouvant dans le sol, présentant :
- un cadre porteur (14),
- au moins une paire de socs d'arrachage (16) montés sur le cadre porteur, qui sont réalisés pour transporter hors du sol des plantes racines (6) se trouvant dans le sol,
- dans lequel la paire de socs d'arrachage (16) définit entre eux un plan médian (M-M),
- dans lequel les socs d'arrachage (16) sont montés sur le cadre porteur de manière mobile dans une direction transversale (QR) par rapport à un sens de la récolte (ER) du dispositif de récolte,
dans lequel le dispositif de récolte présente un dispositif de guidage (30) qui est réalisé pour
détecter la position d'une plante racine (6) se trouvant dans le sol et à récolter et
guider la paire de socs d'arrachage (16) dans la direction transversale (QR) par rapport à la plante racine à récolter en direction d'une position centrée,
dans lequel le dispositif de guidage (30) présente au moins un premier soc de guidage (32),
- qui précède la paire de socs d'arrachage (16) dans le sens de la récolte, et
- qui est réalisé pour entrer en contact avec la plante racine (6) à récolter et, en fonction de la position relative de la plante racine et du premier soc de guidage, pour déplacer la paire de socs d'arrachage (16) par rapport au cadre porteur,
**caractérisé en ce**
**que** le dispositif de guidage présente un support de soc de guidage (50), qui relie le premier soc de guidage (32)
au cadre porteur ou au soc d'arrachage associé, et ainsi
**que** le
support de soc de guidage (50) se trouve sur la face intérieure entre les socs d'arrachage (16) d'une paire et est réalisé pour enlever les impuretés qui se trouvent entre la paire de socs d'arrachage de ces socs d'arrachage.

2. Dispositif de récolte selon la revendication 1, dans lequel
la ou chaque paire de socs d'arrachage (16) est une paire de socs de roue (18),
les socs de roues sont montés de manière rotative sur le cadre porteur, et
chaque soc de roue (18) présente un bord d'arrachage (20).

3. Dispositif de récolte selon la revendication 2, dans lequel chaque soc de roue (18)
- présente une forme de disque ou une forme conique ou/et
- le ou chaque bord d'arrachage (20) est sensiblement circulaire
ou
comprend des segments de cercle.

4. Dispositif de récolte selon l'une quelconque des revendications 1 à 3, dans lequel le dispositif de guidage (30) présente au moins un deuxième soc de guidage (34),
- qui précède la paire de socs d'arrachage (16) dans le sens de la récolte (ER) et
- qui est réalisé pour entrer en contact avec la plante racine (6) à récolter et, en fonction de la position relative de la plante racine et du deuxième soc de guidage, pour déplacer la paire de socs d'arrachage par rapport au cadre porteur.

5. Dispositif de récolte selon la revendication 2 ou 3 ou selon la revendication 4 dans sa dépendance de la revendication 2 ou 3, dans lequel le ou chaque soc de guidage (32, 34) présente un bord avant de soc (36) et un bord arrière de soc (38), dans lequel le bord avant de soc est orienté dans le sens de la récolte (ER) et le bord arrière de soc est orienté sensiblement vers le bord d'arrachage (20) du soc à roues (18) associé et est aligné avec ce bord d'arrachage.

6. Dispositif de récolte selon la revendication 5, dans lequel le ou chaque soc de roue (18) d'une paire de socs d'arrachage (16) s'étend dans le sens de la récolte en s'éloignant du plan médian (M-M) et le bord avant de soc (36) est plus éloigné du plan médian que la partie du bord d'arrachage (20) qui est adjacente au bord arrière de soc (38).

7. Dispositif de récolte selon l'une quelconque des revendications 1 à 6, dans lequel
- le ou
chaque soc de guidage (32, 34) présente une extrémité supérieure (40) et une extrémité inférieure (42),
- le dispositif de récolte présente un rayon de soc SR qui est la distance entre un axe de soc d'arrachage et le bord d'arrachage et
- dans lequel l'extrémité supérieure, vue dans la direction transversale, présente une distance verticale DOE par rapport à l'axe de soc d'arrachage, qui est comprise entre 20 % et 60 % ou entre 40 % et 60 % du rayon de soc SR et/ou
- dans lequel l'extrémité inférieure, vue dans la direction transversale, présente une distance verticale DUE par rapport à l'axe de soc d'arrachage qui est comprise entre 80 % et 100 % ou entre 90 % et 100 % du rayon de soc SR.

8. Procédé d'arrachage de plantes racines, en particulier de betteraves sucrières, **caractérisé en ce que** les plantes racines d'une rangée de plantes racines sont transportées hors du sol
avec un dispositif de récolte selon l'une quelconque des revendications 1 à 7.
